# EUROPEAN PATENT SPECIFICATION

(11) **EP 2 450 093 B1**
(45) Date of publication and mention of the grant of the patent: **29.11.2017**
(21) Application number: 11186710.7
(22) Date of filing: 26.10.2011
(51) Int. Cl.: B01D 29/11, B01D 29/52, B01D 29/96

(54) **Filtering apparatus**
Filtervorrichtung
Appareil de filtrage

(30) Priority: 09.11.2010 TW 99138524; 05.07.2011 TW 100123667
(43) Date of publication of application: 09.05.2012
(73) Proprietor: Stampro Metal Industry Co., Ltd., Taichung City 42953 (TW)
(72) Inventor: Chiang, Pi-Tang, 428 TAICHUNG CITY (TW)
(74) Representative: Becker Kurig Straus

(56) References cited:
- DE-B- 1 064 752
- FR-A1- 2 796 567
- US-A- 2 565 445
- US-A- 2 599 734
- US-A- 3 670 895
- US-A- 4 574 048
- US-A1- 2006 108 276

## Description

### BACKGROUND OF THE INVENTION

### 1. Field of the Invention

The present invention relates generally to a filtering apparatus and more particularly, to a filtering apparatus having a detachable filtering unit.

### 2. Description of the Related Art

A conventional filtering apparatus generally comprises a container barrel and a cap covering on the container barrel. Usually, the inner wall of the container barrel is welded with a filter core mounting plate for installation thereon a plurality of filter cores. Because the filter core mounting plate is welded on the inner wall of the container barrel, when the user conducts the replacement work for the filter cores, the spent, exhausted filter cores have to be taken out from the container barrel one by one firstly, and thereafter the fresh filter cores need to be installed one by one on the filter core mounting plate again. The whole replacement work is time-consuming and labor-consuming. In addition, the sludge and/or impurities accumulated at the bottom portion of the container barrel cannot be conveniently cleaned.

US 4, 574,048 discloses a container barrel and a detachable filtering unit detachably mounted inside the container barrel and provided with a top lid, a bottom lid, a handle, an upright post, and a plurality of filter cores sandwiched between the top lid and the bottom lid, the upright post being serially connected with the bottom lid and the top lid and connected with the handle, the handle being adapted for detaching the whole detachable filtering unit from the container barrel. The top lid comprises a plurality of protruding columns and the bottom lid comprises a plurality of filter core supporting discs corresponding one by one to the protruding columns and each having a through hole. One of the protruding columns and its corresponding protruding columns of the bottom lid are respectively inserted into a top end of the filter core and into the bottom end of each corresponding filter core.

### SUMMARY OF THE INVENTION

The present invention has been accomplished in view of the above-noted circumstances. It is therefore one objective of the present invention to provide a filtering apparatus having a detachable filtering unit that can be taken out from the container barrel.

To achieve the above-mentioned objective, the filtering apparatus provided by the present invention comprises a vertical cylinder shaped container barrel of stainless steel including an inner surface of a surrounding wall, a receiving space defined by the inner surface, a flange protruding outwardly from an outer surface of the surrounding wall at a place adjacent to a top opening of the container barrel, a filtering unit mounting portion extending horizontally from the inner surface towards a center of the container and dividing the receiving space into an upper compartment for storing unfiltered liquid and a lower compartment for storing filtered liquid, a liquid inlet communicating with the upper compartment, a liquid outlet communicating with the lower compartment, a wastewater discharging member mounted at the bottommost location of the bottom portion of the container barrel and including liquid discharging holes located inside the lower compartment, a liquid discharging valve located outside the container barrel and a cap capped on the top side of the container barrel and being provided with a horizontally extending edge. The present invention is characterized in that it further comprises a detachable filtering unit detachably mounted inside the container barrel and provided with a top lid, a bottom lid, a handle, an upright post, and a plurality of filter cores sandwiched between the top lid and the bottom lid, the upright post being serially connected with the bottom lid and the top lid and connected with the handle, the handle being adapted for detaching the whole detachable filtering unit from the container barrel, wherein the top lid comprises a plurality of protruding columns and the bottom lid comprises a plurality of filter core supporting discs corresponding one by one to the protruding columns and each having a through hole; one of the protruding columns is inserted into a top end of the filter core and its corresponding filter core supporting disc supports a bottom end of the filter core, and further comprising a structural reinforcement member formed of a hollow tube having a shank and a flared head that flares from the top of said shank and being provided with a plurality of through holes for passing of filtered liquid, said structural reinforcement member providing an additional support force for the bottom lid to prevent the bottom lid from deformation resulting from pressure, wherein the flared head of the structural reinforcement member is stopped at the bottom lid and the opposite end of the structural reinforcement member is stopped at the lower end of the container barrel, and further comprising a mounting rod having a driven tab on its top portion and a rod-like shank connected with the driven tab and provided at a bottom portion thereof with a thread, wherein the rod-like shank of the mounting rod is inserted through the filtering unit and the structural reinforcement member and threaded at its lower end with the wastewater discharging member with the driven tab abutting, at its upper end, against the handle.

With the top lid having top lid protrusions and the bottom lid having bottom lid protrusions corresponding one by one to the top lid protrusions and each having a through hole, the filter cores can be firmly mounted between the top and bottom lids.

In the filtering apparatus of the present invention, the filtering unit may further comprise a seal ring mounted around a periphery of the bottom lid and abutted against an inner surface of the container barrel to prevent unfiltered liquid from entering into a filtered liquid storage compartment in the container barrel.

With the handle mounted on the top lid, and an upright post connected with the handle and linking the top lid with the bottom lid, the filter cores can be firmly clamped between the top and bottom lids and the filtering unit can be conveniently taken out of the container barrel.

The structural reinforcement member provides sufficient structural strength to resist deformation under pressure.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG 1 is an exploded perspective view of a filtering apparatus according to a preferred embodiment of the present invention;
FIG. 2 is a cross-sectional assembly view of the filtering apparatus according to the preferred embodiment of the present invention;
FIG. 3 is an exploded cross-sectional view of a detachable filtering unit provided by the filtering apparatus of the preferred embodiment of the present invention;
FIG. 4 is a cross-sectional view, showing how the filtering apparatus of the present invention is supposed to work;
FIG. 5 is an exploded cross-sectional view showing an alternate form of the detachable filtering unit;
FIG. 6 is a cross-sectional view, showing that the detachable filtering unit of FIG. 5 is installed inside the container barrel;
FIG. 7 is similar to FIG. 5, but showing an alternate form of filter core is used;
FIG. 8 is a cross-sectional view, showing that the detachable filtering unit of FIG. 7 is installed inside the container barrel;
FIG. 9 is an exploded perspective view, showing the top lid, bottom lid, and upright post of the detachable filtering unit indicated in FIG. 7;
FIG. 10 is a sectional exploded view, showing another alternate form of the detachable filtering unit;
FIG. 11 is a perspective exploded view, showing the top lid, bottom lid, and upright post of the detachable filtering unit indicated in FIG. 10; and
FIG. 12 is a sectional view, showing that the detachable filtering unit indicated in FIG. 10 is mounted inside the container barrel.

### DETAILED DESCRIPTION OF THE INVENTION

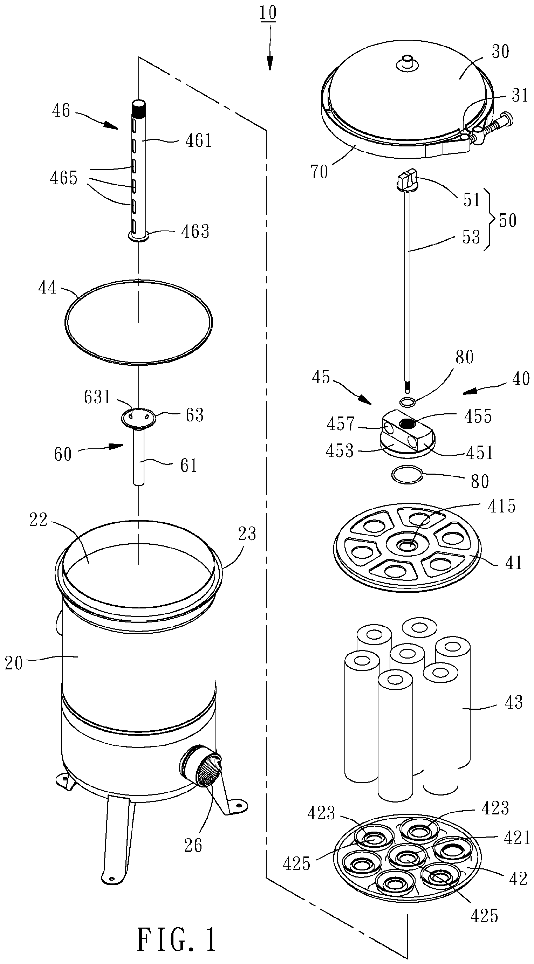

As shown in FIGS. 1-2, a filtering apparatus 10 provided according to a preferred embodiment of the present invention is mainly composed of a container barrel 20, a cap 30, a detachable filtering unit 40, a mounting rod 50, and a structural reinforcement member 60.

The container barrel 20 is made from stainless steel and shaped like a cylinder. The container barrel 20 includes an inner surface 21 of a surrounding wall, a receiving space 22 defined by the inner surface 21, and a flange 23 protruding outwardly from an outer surface of the surrounding wall at a place adjacent to a top opening of the container barrel 20. A filtering unit mounting portion 24 extends horizontally from the inner surface 21 towards a center of the container barrel 20 and divides the receiving space 22 into an upper compartment 221 for storage of unfiltered liquid and a lower compartment 223 for storage of filtered liquid. In addition, the container barrel 20 is provided with a liquid inlet 25 communicated with the upper compartment 221, and a liquid outlet 26 communicated with the lower compartment 223. A wastewater discharging member 27 is mounted at a bottommost location of the bottom portion of the container barrel 20. The wastewater discharging member 27 includes liquid discharging holes 271 located inside the lower compartment 223, and a liquid discharging valve 273 located outside the container barrel 20. Three legs 28 are equiangularly and spacedly mounted to an external bottom surface of the container barrel 20 for enabling the filtering apparatus 10 to stand on the ground G stably.

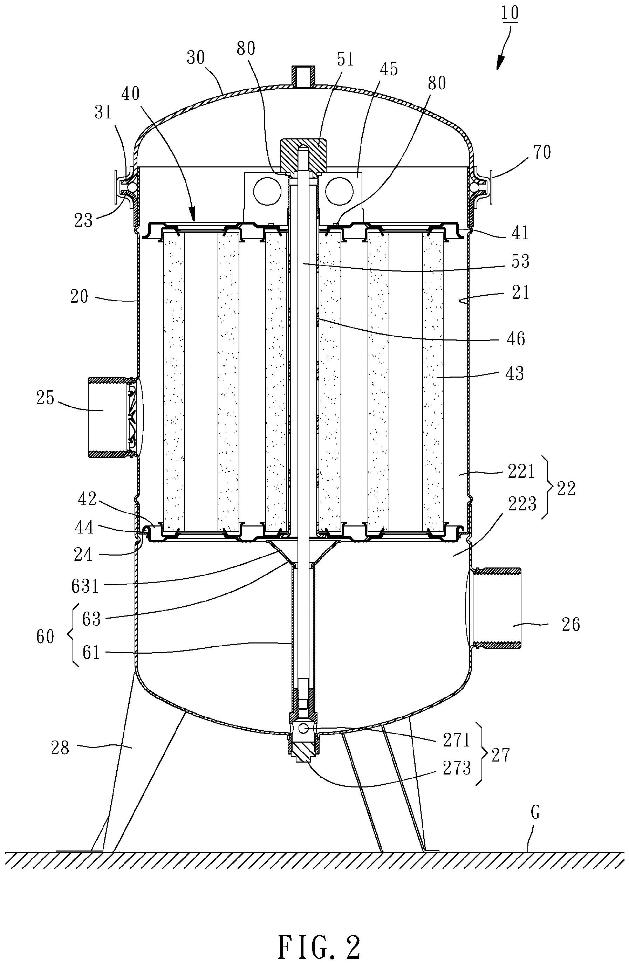

The cap 30 is made from a stainless steel material and provided with a horizontally extending end edge 31. The cap 30 is capped on the top side of the container barrel 20 to prevent dust from entering into the container barrel 20. As shown in FIG. 2, a retainer 70 is provided to surround and tightly hold the end edge 31 of the cap 30 and the flange 23 of the container barrel 20 together, such that the container barrel 20 can be sealed.

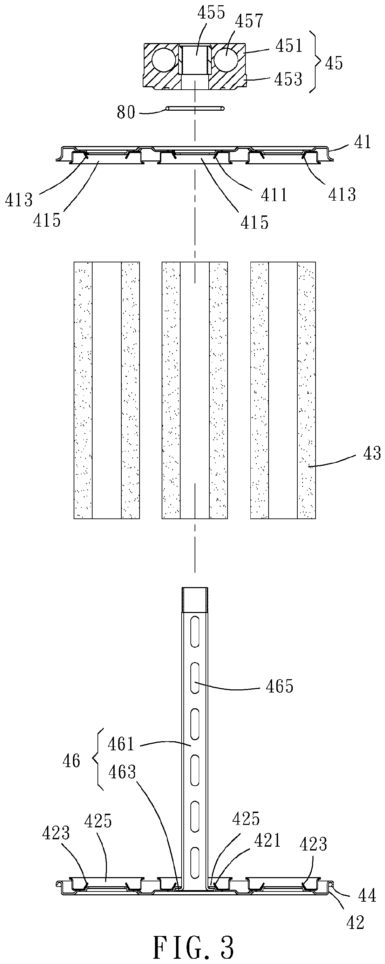

As shown in FIGS. 1-4, the detachable filtering unit 40 is composed of a top lid 41, a bottom lid 42, a plurality of filter cores 43, a seal ring 44, a handle 45, and an upright post 46. The top lid 41 is shaped like a round disc and provided with one center protrusion 411 and six ambient protrusions 413 equiangularly disposed on an imaginary circle surrounding the center protrusion 411. The center protrusion 411 is provided with a through hole 415. In addition, the bottom lid 42 is shaped like a round disc and provided with one center protrusion 421 and six ambient protrusions 423 equiangularly disposed on an imaginary circle surrounding the center protrusion 421. Each of the center protrusion 421 and the ambient protrusions 423 is provided with a through hole 425. The number of the filter cores 43 is though seven in this embodiment but not limited to this number. The filter core 43 is formed of a cotton material having a filtering effect and shaped like a hollow cylinder. The seal ring 44 is a round cushion pad having a sealing effect. The handle 45 has a grip portion 451, a round bottom portion 453 and a threaded through hole 455 penetrating through the grip portion 451 and the bottom portion 453. The grip portion 451 of the handle 45 is provided with two through holes 457 for insertions of user's fingers to facilitate the user to grip and take the filtering unit 40. The upright post 46 is a hollow post having a shank 461 and a bottom 463. The shank 461 of the upright post 46 has a threaded top portion and a plurality of through holes 465 for the passing of filtered liquid L_{f}.

In assembly of the filtering unit 40, as shown in FIGS. 2-3, the filter cores 43 are installed between the top lid 41 and the bottom lid 42 in such a way that the top lid protrusions 411 and 413 and the bottom lid protrusions 421 and 423 are inserted respectively into two ends of the filter cores 43 and the upright post 46 extends through the through hole 425 of the center protrusion 421 of the bottom lid 42, passes through the center one of the filter cores 43 and the through hole 415 of the center protrusion 411 of the top lid 41, and is threaded with the threaded through hole 455 of the handle 45. By means of the aforesaid screwing connection, the top lid 41 and the bottom lid 42 can be forced to move toward each other so as to firmly clamp the filter cores 43 therebetween. In addition, the seal ring 44 is sleeved on a periphery of the bottom lid 42. Further, in order to firmly connect the handle 45 with the top lid 41, filter cores 43, bottom lid 42 and the upright post 46 in sequence and to prevent the unfiltered liquid filled in the upper compartment 221 from flowing into the lower compartment 223 through the upright post 46 without passing through the filter cores 43, an O-ring 80 is provided between the handle 45 and the top lid 41. It will be appreciated that the upright post 46 can be, in practice, welded with the bottom lid 42 directly.

The mounting rod 50 has a driven tab 51 and a rod-like shank 53 connected with the driven tab 51 and provided at a bottom portion thereof with a thread.

The structural reinforcement member 60 is formed of a hollow tube having a shank 61 and a flared head 63 that flares from the top of the shank 61. The flared head 63 has a plurality of through holes 631 for the passing of filtered liquid L_{f}. When the filter cores 43 are used after a long time, its filter effect deteriorates to further result in that the unfiltered liquid Lᵤ in the upper compartment 221 can not be normally filtered and when its pressure is heightened, the structural reinforcement member 60 can provide an additional support force for the bottom lid 42 to prevent the bottom lid 42 from deformation resulting from pressure.

In assembly of the filtering apparatus 10, as shown in FIG 2, the shank 61 of the structural reinforcement member 60 is threaded with the wastewater discharging member 27, the detachable filtering unit 40 is placed on the filtering unit mounting portion 24 of the container barrel 20 with the seal ring 44 abutting against the filtering unit mounting portion 24, the flared head 63 of the structural reinforcement member 60 supports the bottom lid 42 of the filtering unit 40, and the shank 53 of the mounting rod 50 is inserted through the filtering unit 40 and the structural reinforcement member 60 and threaded with the wastewater discharging member 27 with the driven tab 51 abutting against the handle 45. In this way, the filtering unit 40 can be firmly mounted inside the container barrel 20. Similarly, in order to firmly mount the detachable filtering unit 40 to the container barrel 20 and to prevent the unfiltered liquid Lᵤ filled in the upper compartment 221 from flowing into the lower compartment 223 through the upright post 46 without passing through the filter cores 43, an O-ring 80 can be provided between the driven tab 51 of the mounting rod 50 and the handle 45.

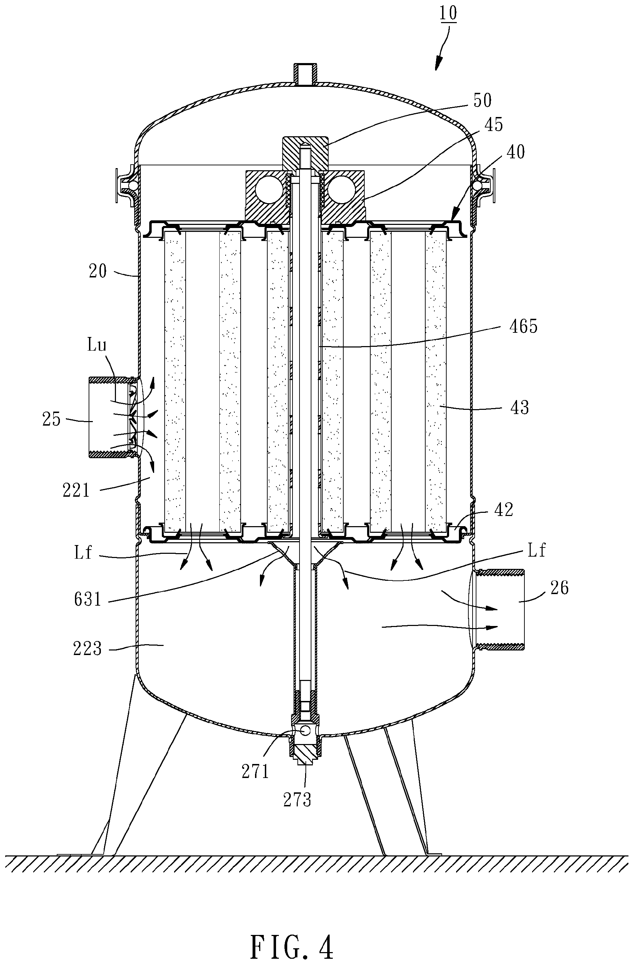

As shown in FIG. 4, when the filtering apparatus 10 of the present invention is in operation, the unfiltered liquid Lᵤ streaming through the liquid inlet 25 of the container barrel 20 will enter the upper compartment 221 of the receiving space 22 of the container barrel 20 and then be filtered by the filter cores 43 to become filtered liquid L_{f}. The filtered liquid L_{f} treated by the ambient filter cores 43 will enter the lower compartment 223 for storage of the filtered liquid through the through holes 425 of the ambient protrusions 423 of the bottom lid 42, and the filtered liquid L_{f} treated by the center filter core 43 will flow into the structural reinforcement member 60 through the through holes 465 of the shank 461 of the upright post 46 and then enter the lower compartment 223 through the through holes 631 of the flared head 63. The filtered liquid L_{f} can eventually be discharged out from the lower compartment 223 through the liquid outlet 26 of the container barrel 20.

When it is intended to replace the filter cores 43 or rinse the container barrel 20, the user can only need to open the cap 30 and then loosen and take the mounting rod 50 out, such that the whole filtering unit 40 can be taken out from the container barrel 20 to facilitate the replacement of the filter cores 43 or the cleaning treatment on the sludge and/or impurities accumulated at the bottom portion of the container barrel 20. After completion of the cleaning washing, wastewater can be discharged out of the container barrel 20 through the liquid discharging hole 271 by opening the liquid discharging valve 273.

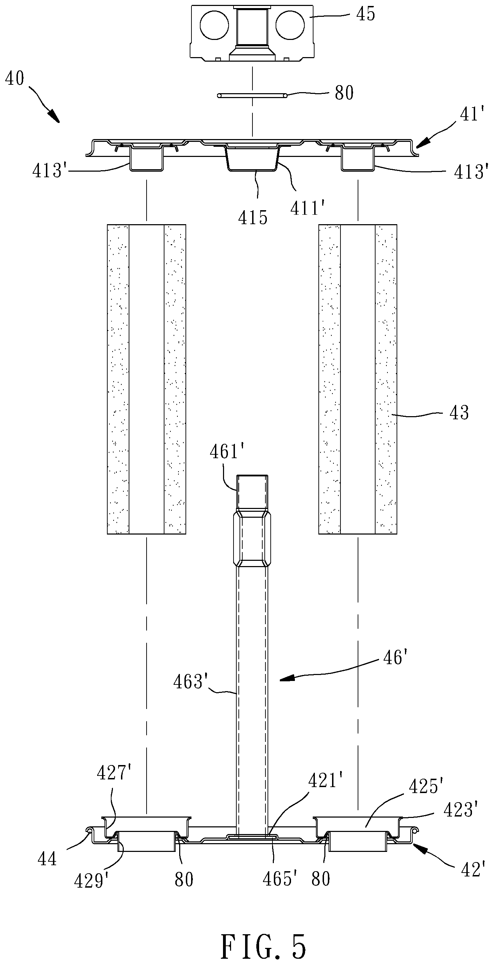

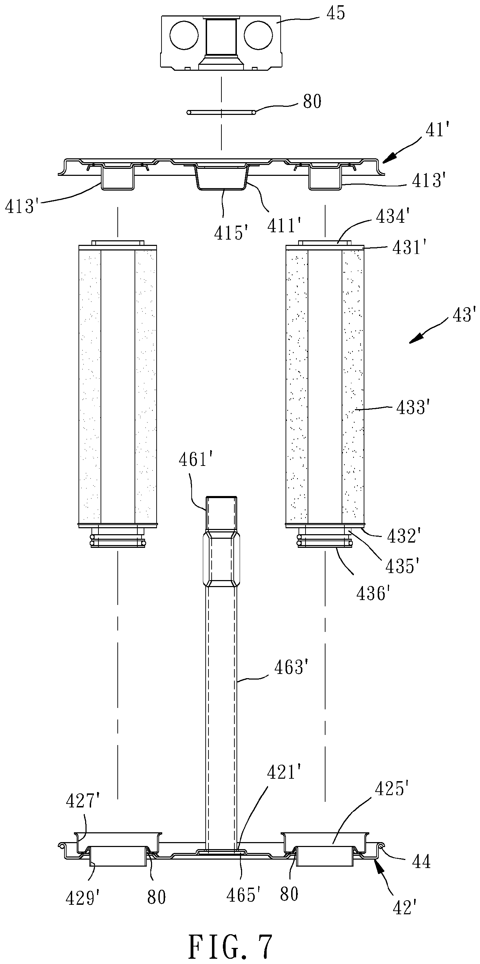

Referring to FIGS. 5-11, the detachable filtering unit used in the present invention may have various alternate forms as disclosed in FIGS. 5, 7 9, and 10 to fit various kinds of commercial available filter core.

Specifically speaking, the detachable filtering unit 40 is composed of a top lid 41', a bottom lid 42' or 42", a plurality of filter cores 43 or 43', a seal ring 44, a handle 45, and an upright post 46'. The number of the filter core 43 or 43' is but not limited to six in this embodiment as an example for illustration only.

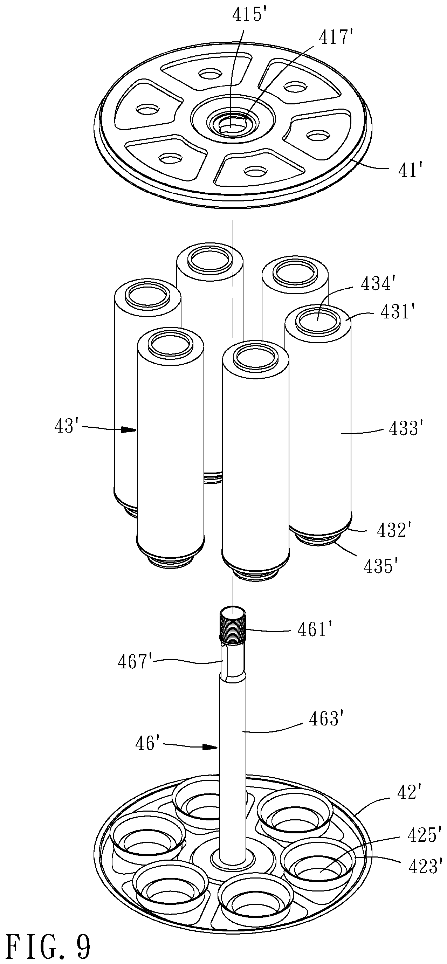

The top lid 41' is shaped like a round disc and provided with one center protruding column 411' and six ambient protruding columns 413' equiangularly disposed on an imaginary circle surrounding the center protruding column 411'. The center protruding column 411' is provided with a through hole 415'. As shown in FIG. 9, the top lid 41' has two opposite restriction portions 417' located at the through hole 415' of the protruding column 411' and formed by two recesses of a wall defining the through hole 415'.

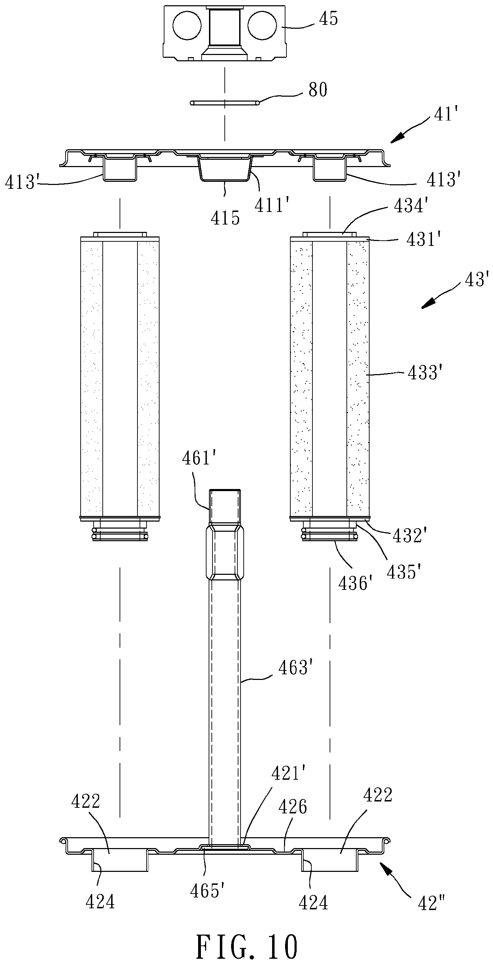

The bottom lid 42' is shaped like a round disc, as shown in FIGS. 5, 7 & 9, and provided with one center through hole 421' and six filter core supporting discs 423' equiangularly disposed on an imaginary circle surrounding the center through hole 421'. Each of the filter core supporting discs 423' is provided with a through hole 425' having a relatively large diameter section 427' and a relatively small diameter section 429'. In practical manufacturing, the filter core supporting discs 423' are fixed on the base of the bottom lid 42' by spot welding. An O-ring 80 is disposed between each filter core supporting disc 423' and the base of the bottom lid 42' to prevent the unfiltered liquid Lᵤ from entering the lower compartment 223 that is adapted for storage of the filtered liquid through the gap between each filter core supporting disc 423' and the base of the bottom lid 42'. In addition, to simplify the manufacturing process, the bottom lid 42" can have the center through hole 421' as shown in FIGS. 10-11 and six through holes 422 instead of the filter cores supporting discs 423' and surrounding the center through hole 421'. Each of through holes 422 has a predetermined depth and a sidewall 424 integrally connected with the internal sidewall 426 of the bottom lid 42".

As shown in FIG. 5, the filter core 43 is shaped like a hollow cylinder and made of a cotton material having a filtering effect as the same as the filter core disclosed in FIG. 1. Alternatively, the filter core 43' shown in FIGS. 7-12 has a top cover 431', a bottom cover 432', and a hollow cotton filtering body 433' clamped between the top and bottom covers 431' and 432'. Each top cover 431' is provided with a restriction recess 434' and each bottom cover 432' is provided with a protrusion 435' with a through hole 436' communicating with the hollow portion of the cotton filtering body 433'.

The configurations of the seal ring 44 and the handle 45 remain the same as disclosed previously.

The upright post 46' is a hollow post having a head 461', a shank 463' and a bottom 465'. The head 461' is provided with a thread. The shank 463' has two opposite ribs 467' adjacent to the head 461'. The upright post 46' is different from the upright post 46 shown in FIG. 1, lying in that the shank 463' does not have the through hole 465. In practical manufacturing, the upright post 46' is welded on the bottom lid 42' or 42; in such a way that the head 461' and the shank 463' extend through the center through hole 421' of the bottom lid 42' or 42".

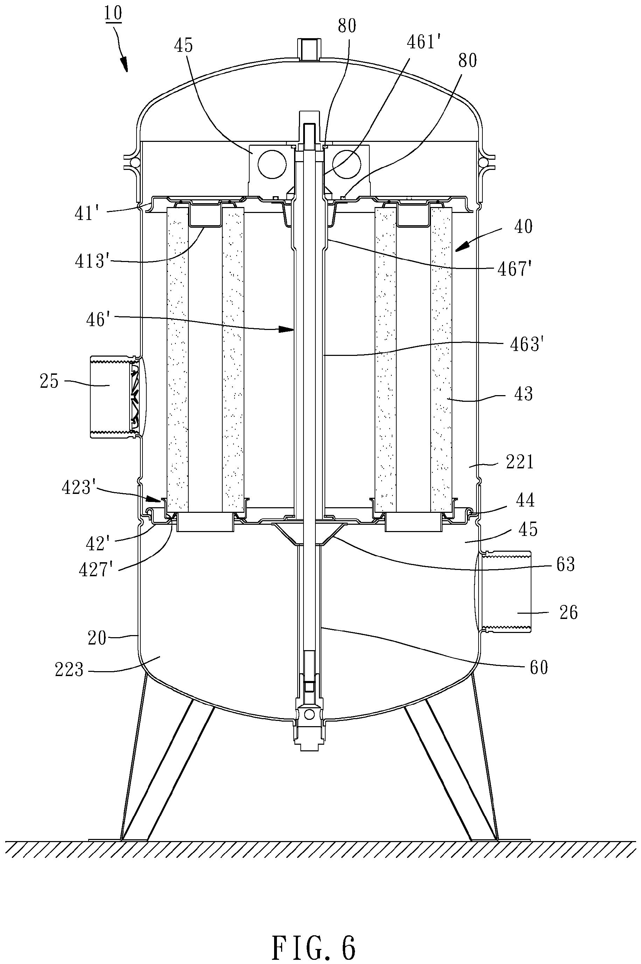

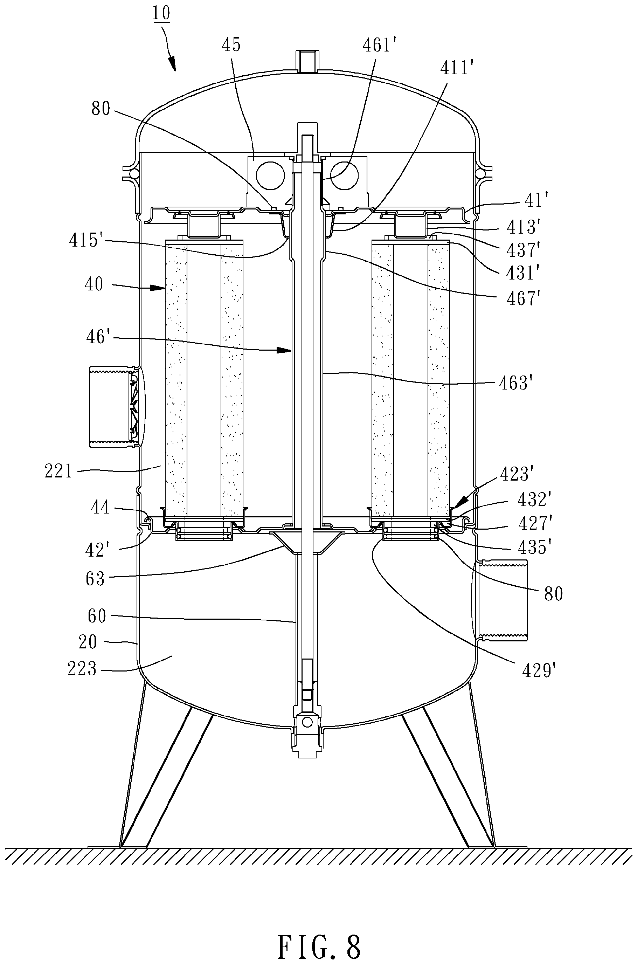

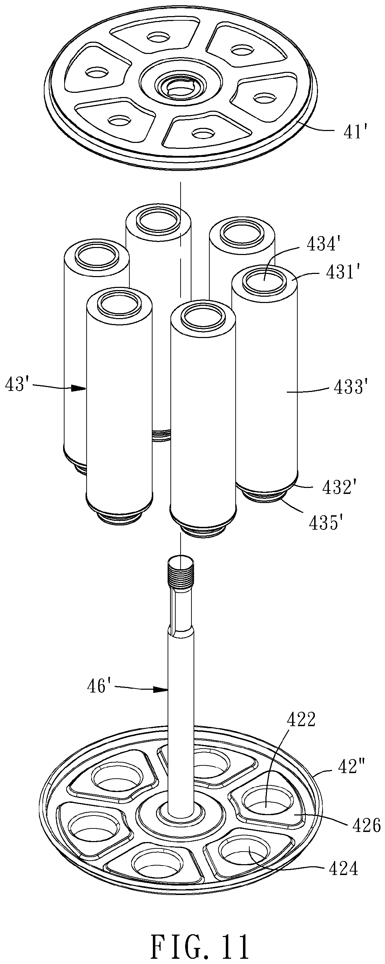

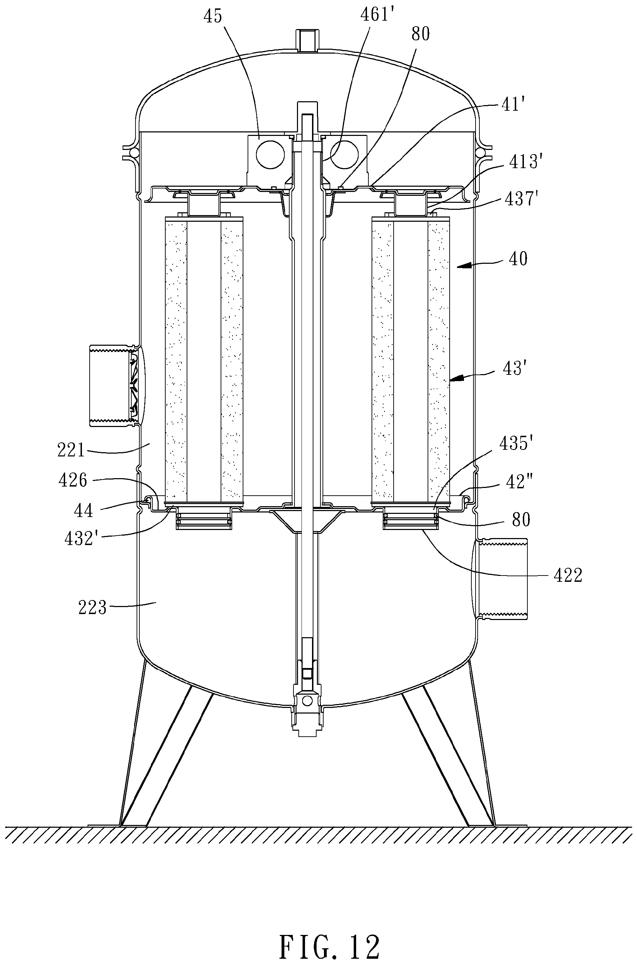

In assembly of the filtering unit 40', as shown in FIG. 6, the filter cores 43 are installed between the top lid 41' and the bottom lid 42' in such a way that the ambient protruding columns 413' of the top lid 41' are inserted respectively into top ends of the filter cores 43 and the bottom ends of the filter cores 43 are respectively received in the relatively large diameter sections 427' of the filter core supporting discs 423'. Alternatively, as shown in FIGS. 8 and 12, the ambient protruding columns 413' of the top lid 41' are respectively received in the restriction recesses 434' of the top cover 431' of the filter core 43', and each of the protrusions 435' of the bottom covers 432' is sleeved thereon with two O rings 80. Besides, as shown in FIG. 8, the bottom covers 432' of the filter cores 43' are received in the relatively large diameter sections 427' of the filter core supporting discs 423' respectively and the protrusions 435' of the bottom cover 432' are respectively inserted into the relatively small diameter sections 429' of the filter core supporting discs 423' and then in tight fit with to be fixed to the relatively small diameter sections 429'. Alternatively, as shown in FIG. 11, the bottom cover 432' of each filter core 43' is stopped against the internal sidewall 426 of the bottom lid 42", and the protrusions 435' of the bottom covers 432' are inserted into the through holes 422 respectively and tightly stopped against the sidewalls 424 of the through holes 422 via the O rings 80.

Besides, the head 461' of the upright post 46' extends through the through hole 415' of the center protruding column 411' of the top lid 41' and is treaded with the threaded through hole 455 of the handle 45. By means of the aforesaid screwing connection, the top lid 41' and the bottom lid 42' or 42" can be forced to move toward each other so as to firmly clamp the filter cores 43 or 43' therebetween. In addition, the ribs 467' of the shank 463' of the upright post 46' are respectively received in the restriction portions 417'. After the replacement work for the filter cores 43 or 43' is completed, the top lid 41' can be positively assembled on the top sides of the filter cores 43, 43' by coupling the restriction portions 417' of the top lid 41 with the ribs 467' of the upright post 46' to facilitate the ambient protruding columns 413' of the top lid 41' to be in alignment with the filter cores 43, 43'. In other words, the detachable filtering unit 40 can be assembled positively, quickly and conveniently. Further, the seal ring 44 is sleeved on a periphery of the bottom lid 42'. Furthermore, in order to firmly connect the handle 45 with the top lid 41', filter cores 43 or 43', bottom lid 42' and the upright post 46' in sequence and to prevent the unfiltered liquid Lᵤ filled in the upper compartment 221 from flowing into the lower compartment 223 through the upright post 46' without passing through the filter cores 43, 43', an O-ring 80 is provided between the handle 45 and the top lid 41'. It will be appreciated that the upright post 46 can be, in practice, welded on the bottom lid 42 directly.

A pressure gauge can be further provided on, for example the cap 30 of the filtering apparatus 10 of the present invention. By means of monitoring the liquid pressure through the pressure gauge, whether the filtering efficiency of the filter cores falls in a normal range can be learned, such that the exact timing of replacing the spent, exhausted filter cores can be obtained.

In conclusion, since the filtering unit of the filtering apparatus of the present invention is detachably installed inside the container barrel and can be taken out from the container barrel conveniently, the replacement work for filter cores can be easily done and sludge and/or impurities accumulated at the bottom portion of the container barrel can be conveniently cleaned.

## Claims

1. A filtering apparatus (10) comprising:
a vertical cylinder shaped container barrel (20) of stainless steel including an inner surface (21) of a surrounding wall,
- a receiving space (22) defined by the inner surface,
- a flange (23) protruding outwardly from an outer surface of the surrounding wall at a place adjacent to a top opening of the container barrel (20),
- a filtering unit mounting portion (24) extending horizontally from the inner surface (21) towards a center of the container (20) and dividing the receiving space (22) into an upper compartment (221) for storing unfiltered liquid (Lᵤ) and a lower compartment (223) for storing filtered liquid (L_{f}),
- a liquid inlet (25) communicating with the upper compartment (221),
- a liquid outlet (26) communicating with the lower compartment (223),
- a wastewater discharging member (27) mounted at the bottommost location of the bottom portion of the container barrel (20) and including liquid discharging holes (271) located inside the lower compartment (223) and
a liquid discharging valve (273) located outside the container barrel (20),
- a cap (30) capped on the top side of the container barrel (20) and being provided with a horizontally extending edge (31),
- a detachable filtering unit (40, 40') detachably mounted inside the container barrel (20) and provided with a top lid (41, 41'), a bottom lid (42, 42'), a handle (45), an upright post (46, 46'), and a plurality of filter cores (43, 43') sandwiched between the top lid (41, 41') and the bottom lid (42, 42'), the upright post (46, 46') being serially connected with the bottom lid (42, 42') and the top lid (41, 42') and connected with the handle (45), the handle (45) being adapted for detaching the whole detachable filtering unit (40, 40') from the container barrel (20), wherein
the top lid (41') comprises a plurality of protruding columns (411', 413') and the bottom lid (42') comprises a plurality of filter core supporting discs (423') corresponding one by one to the protruding columns (411', 413') and each having a through hole (425'); one of the protruding columns (411') is inserted into a top end of the filter core (43') and its corresponding filter core supporting disc (423') supports a bottom end of the filter core (43'),
- a structural reinforcement member (60) formed of a hollow tube having a shank (61) and a flared head (63) that flares from the top of said shank (61) and being provided with a plurality of through holes (631) for passing of filtered liquid (L_{f}), said structural reinforcement member (60) providing an additional support force for the bottom lid (42) to prevent the bottom lid from deformation resulting from pressure, wherein the flared head (63) of the structural reinforcement member (60) is stopped at the bottom lid (42) and the opposite end of the structural reinforcement member (60) is stopped at the lower end of the container barrel (20),
- a mounting rod (50) having a driven tab (51) on its top portion and a rod-like shank (53) connected with the driven tab (51) and provided at a bottom portion thereof with a thread,
wherein the rod-like shank (53) of the mounting rod (50) is inserted through the filtering unit (40) and the structural reinforcement member (60) and threaded at its lower end with the wastewater discharging member (27) with the driven tab (51) abutting, at its upper end, against the handle (45).

2. The filtering apparatus (10) of claim 1, being **characterized in that** the filtering unit (40) comprises a seal ring (44) mounted around a periphery of the bottom lid (42) and abutted against an inner surface of the container barrel (20).

3. The filtering apparatus (10) of claim 1, being **characterized in that** the bottom end of the filter core (43') comprises a protrusion (435'); each of the through holes (425') of the filter core receiving discs (423') comprises a relatively large diameter section (427') receiving the bottom of the filter core (43') and a relatively small diameter section (429') receiving the protrusion (435') of the bottom end of the filter core (43').

4. The filtering apparatus (10) of claim 3, being **characterized in that** the upright post (46) is a hollow post with a shank (461) comprising a plurality of through holes (465).

5. The filtering apparatus (10) of claim 3, being **characterized in that** the upright post (46') comprises a bottom (465') mounted to the bottom lid (42'), a head (461') connected with the handle (45), and a shank (463') connected between the bottom (465') and the head (461'); the head (461') of the upright post (46') pass through a through hole (415') of the protruding column (411') that is located at a center of the top lid (41).

6. The filtering apparatus (10) of claim 5, being **characterized in that** the shank (463') of the upright post (46') is provided with two ribs (467') adjacent to the head (461') of the upright post (46'), and the top lid (41') has two restriction portions (417') located at the through hole (415') of the protruding column (411') and formed by two recesses of a wall defining the through hole (415') of the protruding column (411'); wherein the two ribs (467') are received in the two restriction portions (417') respectively.

## Patentansprüche

1. Filtervorrichtung (10) welche umfasst:
ein zylinderförmiges Behälterfass (20) aus rostfreiem Stahl einschließlich einer inneren Oberfläche (21) einer umgebenden Wand,
- einen durch die innere Oberfläche definierten Aufnahmeraum (22),
- eine nach außen von einer äußeren Oberfläche der umgebenden Wand an einer Stelle neben einer oberen Öffnung des Behälterfasses (20) vorstehende Flansch (23),
- einen Filtereinheit-Befestigungsbereich (24), der sich horizontal von der inneren Oberfläche (21) auf ein Zentrum des Behälters (20) erstreckt und den Aufnahmeraum (22) in einen oberen Bereich (221) zum Speichern nicht-filtrierter Flüssigkeit (Lᵤ) und einen unteren Bereich (223) zum Speichern filtrierter Flüssigkeit (L_{f}) unterteilt,
- einen Flüssigkeits-Einlaß (25), der mit dem oberen Bereich (221) in Verbindung steht,
- einen Flüssigkeit-Auslaß (26) der mit dem unteren Bereich (223) in Verbindung steht,
- ein Abwasser-Ablasselement (27), das an der untersten Stelle des Bodenbereichs des Behälter-Fasses (20) angeordnet ist und Flüssigkeits-Ablasslöcher (271) umfasst, die in dem unteren Bereich (223) vorgesehen sind,
- ein Flüssigkeits-Ablassventil (273), das ausserhalb des Behälter-Fasses (20) angeordnet ist,
- einen Deckel (30), der auf einer oberen Seite des Behälter-Fasses (20) aufgebracht und mit einer sich horizontal ersteckenden Kante (31) versehen ist,
- eine herausnehmbare Filtereinheit (40, 40'), die in dem Behälter-Fass (20) entnehmbar befestigt und versehen ist mit einem oberen Deckel (41, 41'), einem unteren Deckel (42, 42'), einem Griff (45), einem aufrecht stehenden Stab (46, 46') und mehreren Filterkernen (43, 43'), die zwischen dem oberen Deckel (41, 41') und dem unteren Deckel (42, 42') eingeklemmt sind, worin der aufrecht stehende Stab (46, 46') der Reihe nach mit dem unteren Deckel (42, 42') und dem oberen Deckel (41, 42') verbunden ist und mit dem Griff (45) verbunden ist, worin der Griff (45) angepasst ist, die gesamte herausnehmbare Filtereinheit (40, 40') aus dem Behälter-Fass (20) zu entnehmen, worin
der obere Deckel (41') mehrere vorstehende Säulen (411', 413') umfasst und der untere Deckel (42') mehrere Filterkern tragende Scheiben (423') aufweist, die jeweils den vorstehenden Säulen entsprechen (411', 413') und jede ein Durchgangsloch (425') aufweist; worin eine der vorstehenden Säulen (411') in ein oberes Ende des Filterkerns (43') inseriert ist und dessen entsprechende Filterkern-tragenden Scheibe (423') ein unteres Ende des Filterkerns (43') stützt,
ein strukturelles Verstärkungselement (60), das aus einer hohlen Röhre mit einem Schaft (61) und einem Bördelrand (63) ausgebildet ist, der sich von dem oberen Bereich des Schaftes (61) erstreckt und mit mehreren Durchgangslöcher (631) ausgestattet ist, so dass filtrierte Flüssigkeit (L_{f}) durchgelangen kann, worin das strukturelle Verstärkungselement (60) eine zusätzliche Tragekraft für den unteren Deckel (42) liefert, so dass eine Verformung des unteren Deckels aufgrund des Drucks vermieden wird, worin der Bördelrand (63) des strukturellen Verstärkungselements (60) an dem unteren Deckel (42) abstoppt und das abgewandte Ende des strukturellen Verstärkungselements (60) an dem unteren Ende des Behälter-Fasses (20) abstoppt,
einen Befestigungsstab (50) mit einem angetriebenen Tab (51) auf dessen oberen Bereich und einem Stab-ähnlichen Schaft (53), der mit dem angetriebenen Tab (51) verbunden und an einem unteren Bereich davon mit einem Gewinde versehen ist,
worin der Stab-ähnliche Schaft (53) des Befestigungsstabes (50) durch die Filtereinheit (40) und das strukturelle Verstärkungselement (60) inseriert und an dessen unteren Ende mit dem Abwasser-Ablaßelement (27) verschraubt ist, wobei das angetriebene Tab (51) an seinem oberen Ende gegen den Griff (45) aufliegt.

2. Filtervorrichtung nach Anspruch 1, **dadurch gekennzeichnet, dass** die Filtereinheit (40) einen Dichtungsring (44) umfasst, der um einen Umfang des unteren Deckels (42) befestigt ist und gegen eine innere Oberfläche des Behälter-Fasses (20) aufliegt.

3. Filtervorrichtung nach Anspruch 1, **dadurch gekennzeichnet, dass** das untere Ende des Filterkerns (43') einen Vorsprung umfasst (435'); worin jedes der Durchgangslöcher (425') der den Filterkern aufnehmenden Scheiben (423') einen Bereich mit einem relativ großen Durchmesser (427') umfasst, der den unteren Bereich des Filterkerns (43') aufnimmt, und einen Bereich mit einem relativ kleineren Durchmesser (429'), der die Vorsprünge (435') des unteren Endes des Filterkerns (43') aufnimmt.

4. Filtervorrichtung nach Anspruch 3, **dadurch gekennzeichnet, dass** der aufrecht stehende Stab (46) ein hohler Stab mit einem Schaft (461) ist, der mehrere Durchganslöcher (465) umfasst.

5. Filtervorrichtung nach Anspruch 3, **dadurch gekennzeichnet, dass** der aufrecht stehende Stab (46') einen Boden (465') umfasst, der an dem unteren Deckel (42') befestigt ist, einen Kopf (461'), der mit dem Griff (45) verbunden ist, und einen Schaft (463'), der zwischen dem Boden (465') und dem Kopf (461') verbunden ist; worin der Kopf (461') des aufrecht stehenden Stabs (46') durch das Durchgangsloch (415') der vorstehenden Säule (411') gelangt, die im Zentrum des oberen Deckels (41) angeordnet ist.

6. Filtervorrichtung nach Anspruch 5, **dadurch gekennzeichnet, dass** der Schaft (463') des aufrecht stehenden Stabs (46') neben dem Kopf (461') des aufrecht stehenden Stabs (46') mit zwei Rippen (467') versehen ist und der obere Deckel (41') zwei Beschränkungsbereiche (417') aufweist, die an dem Durchgangsloch (415') der vorstehenden Säule (411') angeordnet sind und durch zwei Vertiefungen einer Wand ausgebildet sind, die das Durchgangsloch (415') der vorstehenden Säule (411') definieren; worin die zwei Rippen (467') in den beiden Beschränkungsbereichen (417') aufgenommen werden.

## Revendications

1. Appareil de filtration (10) comprenant :
un corps de récipient en forme de cylindre vertical (20) en acier inoxydable comprenant une surface interne (21) d'une paroi environnante,
- un espace de réception (22) défini par la surface interne,
- une bride (23) faisant saillie vers l'extérieur à partir d'une surface externe de la paroi environnante à un emplacement adjacent à une ouverture supérieure du corps de récipient (20),
- une partie de montage de l'unité de filtration (24) s'étendant horizontalement à partir de la surface interne (21) vers un centre du récipient (20) et divisant l'espace de réception (22) en un compartiment supérieur (221) pour stocker un liquide non filtré (Lᵤ) et un compartiment inférieur (223) pour stocker un liquide filtré (L_{f}),
- une entrée de liquide (25) communiquant avec le compartiment supérieur (221),
- une sortie de liquide (26) communiquant avec le compartiment inférieur (223),
- un élément de décharge d'eaux usées (27) monté à l'emplacement le plus bas de la partie inférieure du corps de récipient (20) et comprenant des trous de décharge de liquide (271) situés à l'intérieur du compartiment inférieur (223) et
une soupape de décharge de liquide (273) située à l'extérieur du cylindre de récipient (20),
- un capuchon (30) recouvert sur le côté supérieur du corps de récipient (20) et comportant un bord s'étendant horizontalement (31),
- une unité de filtration détachable (40, 40') montée de manière amovible à l'intérieur du corps de récipient (20) et munie d'un couvercle supérieur (41, 41'), d'un couvercle inférieur (42, 42'), d'une poignée (45), d'un montant vertical (46, 46') et d'une pluralité de noyaux de filtre (43, 43') pris en sandwich entre le couvercle supérieur (41,41') et le couvercle inférieur (42, 42') le montant vertical (46, 46') étant relié en série au couvercle inférieur (42, 42') et au couvercle supérieur (41, 42') et relié à la poignée (45), la poignée (45) étant conçue pour détacher l'ensemble de l'unité de filtration détachable (40, 40') du corps de récipient (20), le couvercle supérieur (41) comprenant une pluralité de colonnes saillantes (411', 413') et le couvercle inférieur (42') comprenant une pluralité de disques de support de noyau de filtre (423') correspondant l'un à l'autre aux colonnes saillantes (411', 413') et ayant chacun un trou traversant (425') ; l'une des colonnes en saillie (411') est insérée dans une extrémité supérieure du noyau de filtre (43') et son disque de support de noyau de filtre correspondant (423') supporte une extrémité inférieure du noyau de filtre (43'),
- un élément de renforcement structurel (60) formé d'un tube creux ayant une tige (61) et une tête évasée (63) qui s'évase depuis le sommet de ladite tige (61) et comportant une pluralité de trous traversants (631) pour faire passer un liquide filtré (L_{f}), ledit élément de renforcement structurel (60) fournissant une force de support supplémentaire pour le couvercle inférieur (42) pour empêcher le couvercle inférieur de se déformer suite à une pression, la tête évasée (63) de l'élément de renforcement structurel (60) étant arrêtée au niveau du couvercle inférieur (42) et l'extrémité opposée de l'élément de renforcement structurel (60) étant arrêtée à l'extrémité inférieure du corps de récipient (20),
- une tige de montage (50) ayant une languette menée (51) sur sa partie supérieure et une tige en forme de barre (53) reliée à la languette menée (51) et munie au niveau d'une partie inférieure de celle-ci d'un filetage,
la tige en forme de barre (53) de la tige de montage (50) étant insérée à travers l'unité de filtration (40) et l'élément de renforcement structurel (60) et filetée à son extrémité inférieure avec l'élément de décharge d'eaux usées (27) avec la languette menée (51) venant en butée, au niveau de son extrémité supérieure, contre la poignée (45).

2. Appareil de filtration (10) selon la revendication 1, étant **caractérisé en ce que** l'unité de filtration (40) comprend une bague d'étanchéité (44) montée autour d'une périphérie du couvercle inférieur (42) et venant en butée contre une surface interne du corps de récipient (20).

3. Appareil de filtration (10) selon la revendication 1, étant **caractérisé en ce que** l'extrémité inférieure du noyau de filtre (43') comprend une saillie (435'); chacun des trous traversants (425') des disques de réception de noyau de filtre (423') comprend une section de diamètre relativement grand (427') recevant le fond du noyau de filtre (43') et une section de diamètre relativement petit (429') recevant la saillie (435') de l'extrémité inférieure du noyau de filtre (43').

4. Appareil de filtration (10) selon la revendication 3, étant **caractérisé en ce que** le montant vertical (46) est un montant creux ayant une tige (461) comprenant une pluralité de trous traversants (465).

5. Appareil de filtration (10) selon la revendication 3, étant **caractérisé en ce que** le montant vertical (46') comprend un fond (465') monté sur le couvercle inférieur (42'), une tête (461') reliée à la poignée (45), et une tige (463') reliée entre le fond (465') et la tête (461') ; la tête (461') du montant vertical (46') passe à travers un trou traversant (415') de la colonne en saillie (411') qui est situé au centre du couvercle supérieur (41).

6. Appareil de filtration (10) selon la revendication 5, étant **caractérisé en ce que** la tige (463') du montant vertical (46') est munie de deux nervures (257') adjacentes à la tête (461') du montant vertical (46'), et le couvercle supérieur (41') comporte deux parties de restriction (417') situées au niveau du trou traversant (415') de la colonne en saillie (411') et formées par deux évidements d'une paroi définissant le trou traversant (415') de la colonne en saillie (411') ; deux nervures (467') étant reçues dans les deux parties de restriction (417') respectivement.
